# EUROPÄISCHE PATENTSCHRIFT

(11) **EP 4 114 225 B1**
(45) Veröffentlichungstag und Bekanntmachung des Hinweises auf die Patenterteilung: **31.01.2024**
(21) Anmeldenummer: 21710263.1
(22) Anmeldetag: 04.03.2021
(51) Int. Cl.: A43B 1/00, A43B 3/00, A43D 1/02, A43D 999/00, A41H 1/00, A41H 42/00

(54) **VERFAHREN ZUR OPTIMIERUNG VON INDIVIDUELL MASSGESCHNEIDERTEN KLEIDUNGSSTÜCKEN**
METHOD FOR OPTIMISING INDIVIDUALLY MADE-TO-MEASURE ITEMS OF CLOTHING
PROCÉDÉ D'OPTIMISATION D'ARTICLES VESTIMENTAIRES CONFECTIONNÉS SUR MESURE INDIVIDUELLEMENT

(30) Priorität: 06.03.2020 DE 102020106181; 04.05.2020 DE 102020111939
(43) Veröffentlichungstag der Anmeldung: 11.01.2023
(73) Patentinhaber: eekual bionic GmbH, 50825 Köln (DE)
(72) Erfinder: LYONS, William, 50825 Köln (DE)
(74) Vertreter: Patentanwälte Bauer Vorberg Kayser
(86) Internationale Anmeldenummer: PCT/EP2021/055519
(87) Internationale Veröffentlichungsnummer: WO 2021/176018

(56) Entgegenhaltungen:
- EP-A1- 3 199 046
- WO-A1-2006/131714
- WO-A1-2018/085811
- US-A1- 2009 107 009
- US-A1- 2010 324 455
- US-A1- 2015 351 493
- US-A1- 2017 249 783

## Beschreibung

Die Erfindung betrifft Verfahren zur Optimierung von individuell maßgeschneiderten Kleidungsstücken, insbesondere von Schuhen oder Jacken.

Maßgeschneiderte Kleidungsstücke setzen voraus, dass die entsprechenden Körperteile, an die die Kleidungsstücke angepasst werden sollen, möglichst exakt vermessen werden. Anschließend ist eine genaue Fertigung der Kleidungsstücke auf Basis des sich durch die Vermessung ergebenden Datensatzes notwendig.

Es sind zahlreiche Verfahren zur Vermessung von Körperteilen bekannt. Üblicherweise werden Körperteile beispielsweise mithilfe eines Maßbandes vermessen, was einerseits einen hohen Zeitaufwand beansprucht, andererseits fehlerbehaftet ist. Es ist sowohl beim Anhalten des Maßbandes als auch beim Ablesen der Werte möglich, Fehler zu machen.

Beispielsweise sind die Konstruktion und Herstellung von maßgefertigten Schuhen sehr aufwändig, weil insbesondere das Ausmessen der Füße schwierig ist und einen hohen Zeitaufwand erfordert. Weiterhin kann es bei der Übertragung der Messdaten auf die letztendlich zu fertigenden Schuhelemente zu Fehlern kommen.

Nicht zu unterschätzen ist auch, dass insbesondere bei Schuhen auch bei korrektem vermessen Druckstellen auftreten können, die erst bei der Benutzung des Schuhs auffallen. Beispielsweise ist es möglich, dass sich Füße aufgrund des Gangbildes unter Belastung verändern bzw. verformen und dadurch gegen Bereiche des Schuhs drücken. Solche Druckstellen treten im Ruhezustand, wenn der Benutzer also lediglich steht, nicht auf.

Unabhängig davon können sich aber auch dadurch Probleme ergeben, dass sich die maßgeschneiderten Kleidungsstücke durch Benutzung verändern. Beispielsweise können Schuhe einseitig abgelaufen werden, Jacken, Hosen und Oberteile können durch Abrieb bereichsweise verschleißen.

Aber auch das Mikroklima innerhalb des Kleidungsstücks ist für den Benutzer oder Träger von großer Bedeutung. Oft stellt sich erst im Nachhinein heraus, dass die Materialbehandlung oder Materialauswahl des Kleidungsstücks für den Benutzer ungünstig ist. Neigt der Träger des Kleidungsstücks beispielsweise zur Schweißbildung, sollten in diesen Bereichen eher luftdurchlässige oder leichte Materialien verwendet werden. Diese Informationen liegen aber bei der Fertigung des Kleidungsstücks in der Regel nicht vor.

Die Druckschrift EP 031 990 046 A1 beschreibt zum Beispiel ein Verfahren zur Herstellung und individuellen Anpassung eines Sportkleidungsstücks basierend auf Sensordaten. In einem ersten Schritt kauft und verwendet eine Person ein Produkt, das mit zumindest einem Sensor ausgestattet ist. Der Sensor zeichnet während der Benutzung Daten auf, beispielsweise bei einem Schuh Beschleunigungs- oder Druckdaten. Diese Daten liefern Informationen über den Nutzer (z. B. Gewicht) oder die Nutzung des Kleidungstück (z. B. Laufgeschwindigkeit), jedoch nicht über das Kleidungsstück selbst (z. B. Abnutzung). Die Sensordaten werden in einem nächsten Schritt ausgelesen und für eine individuelle Anpassung des Kleidungsstücks in einer nächsten Generation für den Benutzer genutzt. Mit Hilfe des Verfahrens werden also über aktive Sensoren während der Nutzung des Kleidungsstücks Daten ermittelt.

Auch anderen Druckschriften offenbaren Lösungen für sensorbasierte Anpassungen von Kleidungsstücken, beispielsweise die US 2010 032 4455 A1, WO 188085811 A1, WO 06131714 A1, US 2009 010 7009 A1, US 2017 024 9783 A1, US 2015 035 1493 A1.

Die Aufgabe der vorliegenden Erfindung besteht darin, ein Verfahren zur Optimierung von individuell maßgeschneiderten Kleidungsstücken, insbesondere von Schuhen vorzuschlagen, das zu einem verbesserten bzw. erhöhten Tragekomfort des Kleidungsstücks führt. Das Verfahren soll dabei möglichst einfach durchführbar und für einen hohen Automatisierungsgrad geeignet sein.

Erfindungsgemäß wird die Aufgabe durch ein Verfahren zur Optimierung von individuell maßgeschneiderten gleichartigen Kleidungsstücken mit den folgenden Verfahrensschritte gelöst:
a. Vermessen zumindest eines Körperteils und Erzeugen eines ersten Datensatzes für die Fertigung des Kleidungsstücks, enthaltend Abmessungen des Körperteils,
b. Herstellen eines ersten Kleidungsstücks auf Basis des ermittelten Datensatzes, wobei das Kleidungsstück zumindest ein maschinenlesbares Indikatorelement aufweist, über das Eigenschaften und/oder Veränderungen des Kleidungsstücks aufgrund der Nutzung des Kleidungsstücks durch einen Benutzer als binärer Code ermittelbar sind,
c. Nutzung des ersten Kleidungsstücks durch einen Benutzer,
d. Untersuchen des genutzten ersten Kleidungsstücks hinsichtlich Veränderungen aufgrund der Nutzung durch den Benutzer für die Fertigung eines gleichartigen zweiten Kleidungsstücks, dabei
   - Erzeugen eines zweiten Datensatzes, enthaltend Abmessungen des genutzten ersten Kleidungsstücks,
   - Vergleichen des zweiten Datensatzes mit dem ersten Datensatz,
   - Überprüfen des Indikatorelements hinsichtlich für die Fertigung des zweiten Kleidungsstücks relevanter Informationen,
e. Erzeugen eines dritten Datensatzes basierend auf dem ersten Datensatz, dem zweiten Datensatz und dem Ergebnis aus der Überprüfung des Indikatorelements,
f. Herstellen des zweiten Kleidungsstücks auf Basis des dritten Datensatzes,
g. bedarfsweise Wiederholen der vorherigen Verfahrensschritte d) bis f) ausgehend vom jeweils zuletzt hergestellten und genutzten Kleidungsstück zur weiteren Optimierung der Passform und/oder der Eigenschaften des jeweils neu zu fertigenden Kleidungsstücks.

Die Erfindung basiert also unter anderem auf der Idee, dass bei der Fertigung maßgeschneiderter gleichartiger Kleidungsstücke stets Rückmeldungen aus der Benutzung des zuvor gefertigten Kleidungsstücks berücksichtigt werden. Die Herstellung der verschiedenen Generationen der Kleidungsstücke erfolgt in einem kontinuierlichen Loop. Das Verfahren ist sozusagen lernfähig, was zu sich von Generation zu Generation verbessernden Kleidungsstücken führt.

Der Begriff "gleichartiges Kleidungsstück" bedeutet im Sinne der Erfindung, dass sich die Kleidungsstücke verschiedener Generationen im Wesentlichen entsprechen, insbesondere hinsichtlich Abmessungen und Material.

Die Optimierung des Kleidungsstücks kann dabei in Bezug auf nur einen Benutzer individuell von Generation zu Generation des Kleidungsstücks erfolgen, möglich ist aber auch eine Optimierung eines gleichartigen Kleidungsstücks unterschiedlicher, also mehrerer Benutzer. Dies bedeutet, dass beispielsweise von einer Vielzahl von Jacken einer bestimmten Kollektion, die für mehrere Benutzer gefertigt wurde, nach der Nutzung jeweils ein Datensatz erzeugt wird, der die Informationen der jeweiligen Indikatorelemente beinhaltet. Somit ist es möglich, grundsätzliche Schwachstellen des Produkts aufzudecken und in der nächsten Generation zu vermeiden.

Die Anpassung der nächsten Generation des Kleidungsstücks kann beispielsweise eine Verstärkung von Material in bestimmten Bereichen beinhalten. Nutzt sich beispielsweise ein Schuh im Bereich des großen Zehs stark ab, kann dieser Bereich entsprechend verstärkt werden. Denkbar ist auch, dass bei einer individuellen Verbesserung für nur einen Benutzer die Sohle eines Schuhs in einen bestimmten Bereich verstärkt wird, wenn der Benutzer aufgrund seines Gangbildes eine ungleichmäßige Abnutzung bewirkt. Auch Druckstellen können auf diese Weise entfernt werden.

Die Indikatorelemente sind erfindungsgemäß als passive Indikatorelemente ausgeführt, deren Veränderung registrier- und auswertbar ist. Insofern unterscheiden sich die Indikatorelemente von aktiven Elementen, die beispielsweise Daten registrieren, speichern und beispielsweise per Funk oder einer alternativen Technik an einen Prozessor weiterleiten. Passive Indikatorelemente sind deutlich kostengünstiger herzustellen, sind einfacher in das Design zu integrieren und können nicht aufgrund technischer Defekte ausfallen.

Der Begriff Indikatorelement im Sinne der Erfindung umfasste zum einen zum Kleidungsstück hinzugefügte Elemente, die im Wesentlichen die Funktion haben, als Indikatorelement zu dienen. Als Indikatorelement können aber auch Elemente des Kleidungsstücks verwendet werden, die ohnehin vorhanden sind. Denkbar ist zum Beispiel, dass die Position von Öffnungen für Schnürsenkel, bestimmte Nähte und deren Verlauf oder andere Designelemente bzw. deren Position im Raum oder zu einer Referenz genutzt werden.

Die erfindungsgemäßen Indikatorelemente stellen eine Art maschinenlesbaren binären Code dar. In einer besonders einfachen Ausführungsvariante kann es sich um einen farbigen Punkt handeln, der durch Benutzung des Kleidungsstücks abgeschrieben werden kann. Somit kann mithilfe einer Kamera schnell und einfach ermittelt werden, ob das Kleidungsstück in diesem Bereich abgenutzt ist oder nicht. Ist der farbige Punkt noch erkennbar, ist die Abnutzung gering, ist er nicht mehr erkennbar, ist das Kleidungsstück in diesem Bereich abgenutzt.

Die Indikatorelemente werden vorzugsweise optisch ausgelesen, beispielsweise durch die bereits erwähnte Kamera, ein Lasermessverfahren oder beispielsweise auch mithilfe von Ultraschall oder Infrarotlicht. Dies ist insbesondere bei sich in ihren Abmessungen verändernden Indikatorelementen sinnvoll, beispielsweise bei sich abtragenden Erhebungen oder zunehmenden bzw. sich reduzierenden Vertiefungen. Die optische Vorrichtung kann also dazu geeignet sein, die Veränderungen der Dimensionen unmittelbar zu messen und die Messergebnisse an einen Prozessor weiterzuleiten. Der Prozessor vergleicht die neu ermittelten Messwerte mit den ursprünglichen Messwerten bzw. Dimensionen der Indikatorelemente. Mögliche Unterschiede der Dimensionen können dann dazu genutzt werden, den für die Herstellung der nächsten Generation des Kleidungsstücks zugrunde liegenden Datensatz und damit auch das nächste Kleidungsstück selbst entsprechend anzupassen.

Es kann sich dabei um erkennbare farbige Punkte handeln, erfindungsgemäß sind aber auch Farben oder Beschichtungen denkbar, die für das menschliche Auge kaum oder gar nicht sichtbar sind. Beispielsweise können fluoreszierende Punkte vorgesehen sein, die nur unter entsprechendem Licht zu erkennen sind.

Die Farbpunkte kann dabei bündig mit der umgebenden Oberfläche abschließen, sie können aber auch vertieft angebracht sein. Dadurch wird erreicht, dass zunächst die umgebende Oberfläche abgetragen werden muss, bevor der Farbpunkt abgerieben wird. Selbstverständlich es auch möglich, die Farbpunkte auf Erhebungen vorzusehen, die gegenüber dem umgebenden Material vorstehen.

Anstelle von Farbpunkten können auch lediglich gegenüber der umgebenden Oberfläche vorstehende Elemente, beispielsweise Dome, vorgesehen sein. Sind diese aufgrund von Abrieb reduziert oder vollständig entfernt, besteht in diesem Bereich offensichtlich eine hohe Abnutzung. Bei dieser Ausführungsvariante kann nicht nur eine binäre Information verarbeitet werden, es ist auch möglich, den Grad der Abnutzung zu bestimmen. Es ist erfindungsgemäß möglich, die Höhe der Dome bzw. die Veränderung der Höhe über deren Schattenwurf durch eine definiert entfernte Lichtquelle ermitteln.

Auch ist es denkbar Vertiefungen als Indikatorelemente vorzusehen, deren Tiefe im Laufe der Benutzung abnimmt. Es ist erfindungsgemäß auch für Vertiefungen möglich, den Schattenwurf durch eine definiert entfernten, erhöhten Lichtquelle zu ermitteln. Es wird dann der Schattenwurf des Rades der Vertiefung genutzt.

Als passives Indikatorelement kann auch eine Veränderung im Oberflächenmaterial dienen, beispielsweise ein besonderer Faden oder eine zusätzliche Schlaufe, die sich aufgrund der Abnutzung verändert oder verliert. Auch kann ein kleine Kugel eingearbeitet sein, die sich ebenfalls verändert oder abnutzt und/oder letztendlich verloren geht. Denkbar ist auch die Anordnung einer Reihe kleiner Kugeln, durch die entweder ein einziger Faden oder mehrere unterschiedliche Fäden verlaufen.

Denkbar ist auch, dass die Kleidungsstücke in bestimmten Bereichen ein Material aufweisen, dass aus unterschiedlich gefärbten, untereinander angeordneten Schichten aufgebaut ist. Somit ändert sich die von außen erkennbare Farbe mit dem Grad der Abnutzung. Beispielsweise kann auf eine blaue Schicht eine rote und schließlich eine gelbe Schicht folgen. Zunächst wird die blaue Schicht abgetragen, dann die rote und schließlich die gelbe Schicht.

Die Indikatorelemente können auch derart ausgeführt sein, dass über diese neben der Abnutzung auch andere nutzbare Rückschlüsse ableitbar sind. Beispielsweise können die Indikatorelemente Beschichtungen aufweisen, über die Feuchtigkeit, pH-Wert, Temperatur oder ähnliches registrierbar ist. Über solche Informationen können dann wiederum Rückschlüsse auf ein Mikroklima innerhalb des genutzten Kleidungsstücks gezogen werden. Schwitzt beispielsweise der Benutzer an bestimmten Stellen seines Körpers stärker als beispielsweise an anderen, zeigen Indikatorelemente dies an und das Kleidungsstück kann in der nächsten Generation an diese Bedingungen angepasst verbessert werden. Beispielsweise können in solchen Bereichen dann Belüftungsöffnungen oder auch nur atmungsaktivere oder dünnere Materialien vorgesehen sein. Als pH-Indikator eignet sich beispielsweise eine Beschichtung Phenolphthalein.

Grundsätzlich ist es natürlich auch möglich, dass die Indikatorelemente als Kombinationselemente sowohl für die Ermittlung der Abnutzung als auch für die Ermittlung weiterer Daten gleichermaßen genutzt werden können.

Das gleiche gilt für eine gewünschte Wasserundurchlässigkeit des Kleidungsstücks. Über die Indikatorelemente kann ermittelt werden, an welchen Stellen das Kleidungsstück nicht optimal gegen Feuchtigkeit abgedichtet ist. Eindringende Feuchtigkeit kann erkannt und in der nächsten Generation durch entsprechende Anpassung des Kleidungsstücks verhindert werden.

Ein wesentlicher Vorteil der Erfindung besteht darin, dass die Informationen hinsichtlich der Abmessungen, der Abnutzung und auch der übrigen Information der Indikatorelemente im optimalen Fall automatisiert ausgewertet werden können. Letztendlich ist es möglich, die Kleidungsstücke voll automatisiert von einer Generation zur nächsten anzupassen und zu verbessern. Beispielsweise können sogar Druckstellen durch minimale Abweichungen in den Abmessungen erkannt werden. Hierzu ist lediglich eine ausreichend genaue Vermessungsvorrichtung notwendig, die die entsprechenden Daten an einen Prozessrechner weiterleitet. Dieser vergleicht ältere vorherige Datensätze des entsprechenden Kleidungsstücks mit den aktuell ermittelten Daten oder Datensätzen. Der Prozessrechner kann dann entsprechend Anpassungen vornehmen und den aktualisierten Datensatz an eine Fertigungsmaschine zur Fertigung der nächsten Generation des Kleidungsstücks weiterleiten.

Selbstverständlich kann es je nach Kleidungsstück notwendig und hilfreich sein, wenn automatisiert gefertigte Elemente der Kleidungsstücke von Hand zusammengesetzt werden.

Auch hat es sich erfindungsgemäß als vorteilhaft erwiesen, wenn gegebenenfalls auch das Körperteil, also beispielsweise der Fuß, vor Fertigung der nächsten Generation des Kleidungsstücks erneut vermessen und die darauf basierenden Daten ebenfalls in die Optimierung der nächsten Generation des Kleidungsstücks einflie-ßen. Dadurch wird berücksichtigt, dass sich auch Körperteile im Laufe der Zeit aus verschiedenen Gründen verändern können. Das sich verändernde Körperteil und das daran angepasste Kleidungsstück entwickeln sich sozusagen gleichzeitig bzw. in Abhängigkeit voneinander weiter, sodass ein optimaler Tragekomfort über eine lange Zeit erhalten bleibt.

Grundsätzlich ist es möglich, die Vermessung der Körperteile mithilfe einer Datenwolke vorzunehmen, also beispielsweise mit einem Scan. Dabei werden eine Vielzahl an Datenpunkten vermessen und registriert, aus denen dann die Form des Körperteils ermittelt wird.

In einer besonders vorteilhaften Ausführungsvariante erfolgt die Vermessung des Körperteils allerdings auf Basis spezifischer einzelner Referenzpunkte. Es hat sich nämlich gezeigt, dass die Datenmenge und auch die Geschwindigkeit des Verfahrens erheblich reduziert werden können, wenn lediglich die wesentlichen Referenzpunkte berücksichtigt werden. Es werden also nur Daten relevanter Referenzpunkte ermittelt.

Die Vermessung der Körperteile, für die das Kleidungsstück gedacht sein soll, erfolgt in einer besonders vorteilhaften Ausführungsvariante mithilfe eines mobilen Endgeräts, dass eine digitale Kamera aufweist.

Es ist ein Größenreferenzobjekt notwendig, dessen Abmessungen bekannt sind. Das Größenreferenzobjekt kann beispielsweise durch einen Würfel oder Quader gebildet sein, es sind aber auch andere Objekte mit bekannten Abmessungen verwendbar.

Mithilfe der digitalen Kamera werden mehrere Bilder des Körperteils aus verschiedenen Perspektiven aufgenommen. Wesentlich ist dabei, dass die Bilder gleichzeitig ein Größenreferenzobjekt umfassen, dass im Bereich des Köperteils angeordnet ist. Neben dem Sichtwinkel der Perspektive ist es für die Berechnung der Dimensionen weiterhin notwendig, den Abstand der Kameralinse zum Größenreferenzobjekt zu kennen.

Im Folgenden wird die Erfindung für die Vermessung eines Fußes und die Fertigung eines Schuhs erläutert, wobei die Erfindung nicht auf dieses Beispiel beschränkt sei soll. Vielmehr stellt der Fuß lediglich beispielhaft ein zu vermessendes Körperteil und der Schuh ein Fertigungsteil im Sinne der Erfindung dar.

In einer besonders vorteilhaften Ausführungsvariante ist das Größenreferenzobjekt durch ein Blatt bestimmter Größe, beispielsweise ein DIN-A4 Blatt gebildet. Alternativ sind auch andere in ihrer Größe genormte Blätter verwendbar, weswegen im Folgenden stellvertretend der Begriff "Blatt" verwendet wird. Dieses Blatt wird auf einen einem Untergrund abgelegt und der zu vermessenen Fuß darauf positioniert. Anschließend werden mit der digitalen Kamera Fotos aus verschiedenen Perspektiven gemacht und abgespeichert. Da die Abmessungen des Blatts bekannt sind, können daraus der Abstand der Kameralinse zum Blatt und die Abmessungen des Fußes berechnet werden.

Vorteilhafterweise kann die Berechnung bzw. Vermessung des Fußes dadurch erleichtert werden, dass die Bilder stets aus einem bestimmten Abstand und aus einem bestimmten Sichtwinkel bzw. einer bestimmten Perspektive aufgenommen werden. Beispielsweise kann der Abstand der Kameralinse zum Fuß 40-60 cm, vorzugsweise 50 cm betragen. Aus diesem Abstand werden beispielsweise fünf Fotos aus verschiedenen Perspektiven, also unter verschiedenen Sichtwinkeln aufgenommen.

Die Aufnahme von mehreren Fotos aus verschiedenen Perspektiven ist unter anderem deswegen notwendig, weil die Kamera nie zu allen Referenzpunkten des Fußes gleichzeitig lagerichtig ausgerichtet sein kann. Beispielsweise ist es notwendig, dass die Kamera zu bestimmten Referenzpunkten lotrecht ausgerichtet ist. Insofern müssen jeweils Fotos in Bezug auf mehrere Referenzpunkte aufgenommen werden.

Um die Aufnahme der Bilder mit dem gewünschten Abstand und den verschiedenen Perspektiven zu gewährleisten, kann auf dem digitalen Endgerät zumindest ein Programm bzw. eine Applikation installiert sein, die den Benutzer während der Nutzung sozusagen anleitet und hilft, die Kamera in die richtige Position im Raum zu bringen, um dann ein Bild aufzunehmen. Hierzu weist die Kamera vorzugsweise einen Lagesensor auf, beispielsweise einen Gyrosensor, mit dem ein Kippen oder Neigen des Smartphones registrierbar ist. Besonders vorteilhaft ist weiterhin die Nutzung eines integrierten Kompasses, der eine Drehung der Digitalkamera bzw. des Smartphones um dessen Hochachse registriert.

Die Applikation zeigt die vom Lagesensor ermittelte aktuellen Lage der Kamera im Raum in einer Lageanzeige dar. Dies kann beispielsweise durch eine wie bei einer Wasserwaage übliche Libelle erfolgen, die insbesondere virtuell auf einem Display dargestellt wird.

Weiterhin ist für jede der unterschiedlichen Perspektiven, aus denen Bilder aufgenommen werden sollen, jeweils eine vorgegebene Hilfsanzeige vorgesehen. Über diese ist die zur Aufnahme des jeweiligen Bildes korrekte Lage der Kamera in Verbindung mit der aktuellen Lageanzeige einstell- bzw. durch eine als Ausrichtungshilfsanzeige anzeigbar.

Es bietet sich beispielsweise an, dass ein Element, beispielsweise ein Punkt auf die Lage der Kamera reagiert. Dieses Element muss durch Veränderung der Lage der Kamera in einen bestimmten Bereich auf dem Display gebracht werden, beispielsweise einen ortsfesten Kreis. Befindet sich der Punkt innerhalb des Kreises, ist die Kamera lagerichtig ausgerichtet.

Es ist möglich, unterschiedliche Kreise an unterschiedlichen Stellen auf dem Display anzuzeigen, um darüber verschiedene Lagen der Kamera zu realisieren. Wird der Punkt also in einen ersten Kreis geführt, befindet sich die Kamera in einer ersten Lage, wird der Punkt dann in einen zweiten anderen Kreis geführt, befindet sich die Kamera in einer zweiten anderen Lage, usw.. Immer dann, wenn sich der Punkt in dem jeweiligen Kreis befindet, wird eine Aufnahme getätigt und ein Bild erzeugt.

Alternativ kann vorgesehen sein, dass anstelle von mehreren Kreisen nur ein einziger Kreis stets an der gleichen Stelle angezeigt wird. Allerdings ist die Applikation derart programmiert, dass ein mehrmaliges in Deckung bringen des Punktes mit dem Kreis nacheinander jeweils zu unterschiedlichen Lagen der Kamera führt. Es wird also eine Abfolge mehrerer Bilder aufgenommen, wobei die Position des Punktes in dem Kreis jeweils eine andere Lage der Kamera repräsentiert. Beispielsweise kann die Applikation auffordern, ein erstes Bild aufzunehmen, wobei der Benutzer zunächst den Punkt der als Ausrichtungshilfsanzeige in den Kreis führen muss.

Nach Aufnahme des Bildes erfolgt die Aufforderung ein zweites Bild aufzunehmen. Der Benutzer muss erneut den Punkt in den Kreis führen, wobei die Applikation hierbei berücksichtigt, dass sich die Lage der Kamera für das nächste Foto von der Lage der Kamera des zuvorigen Fotos unterscheidet. Der Punkt befindet sich also dann wieder im Kreis, wenn die Kamera entsprechend neu und korrekt ausgerichtet ist.

Zur Einstellung des korrekten Abstands der Kamera vom des Größenreferenzobjekt können weiterhin Hilfslinien auf dem Display der Kamera dargestellt werden. Die Hilfslinien entsprechen für jede der unterschiedlichen Perspektiven der Außenkontur des Größenreferenzobjekts aus der jeweiligen Perspektive, wobei die Hilfslinien zur Aufnahme des jeweiligen Bildes mit der Außenkontur des Größenreferenzobjekts in Deckung gebracht werden müssen.

Die Linien können beispielsweise rot dargestellt werden, wenn der Abstand der Kamera nicht korrekt ist. Sind die Hilfslinien mit den äußeren Abmessungen des Blatts lagerichtig positioniert, werden die Hilfslinien grün dargestellt und der Benutzer wird aufgefordert, ein Foto aufzunehmen. Dadurch ist gewährleistet, dass die anschließende Berechnung der Dimensionen des Fußes der konkrete Abstand und die konkrete Lage der Kamera gegeben sind.

Es hat sich als besonders einfach erwiesen, wenn die Applikation über die Ausrichtungshilfsanzeige zunächst die sicherstellt, dass sich die Kamera lagerichtig im Raum befindet. Dies kann ebenfalls durch einen Farbindikator, beispielsweise einen grünen Punkt im Kreis der Libelle symbolisiert werden. Anschließend wird dann die Kamera solange auf das Größenreferenzobjekt zubewegt, bis die Hilfslinien dieses bestimmungsgemäß umgeben. Erst dann wird das entsprechende Bild aufgenommen.

Erfindungsgemäß werden auf diese Weise ausreichend viele Bilder aus verschiedenen Richtungen bzw. Perspektiven zur anschließenden Bestimmung der Referenzpunkte und Berechnung der Dimensionen aufgenommen.

Ein besonderer Vorteil kann weiterhin dann erreicht werden, wenn das Blatt vorzugsweise diagonal gefaltet und hochgeklappt wird. Der zu vermessenen Fuß wird erneut auf dem Blatt ausgerichtet und die Kamera in seitliche bzw. schräge Position zum Fuß gebracht. Auch hierbei kann der Benutzer auf die Applikation und die damit verbundene Ausrichtungshilfsanzeige und die Hilfslinien zurückgreifen.

Die spätere Berechnung erfolgt somit nicht nur in zweidimensionaler Richtung in Bezug auf die Breite und Länge des Blatts, sondern über den hochgefalteten Bereich auch in Z-Richtung, also unter Berücksichtigung der Höhe zum Vordergrund bzw. zum Blatt.

Wird anstelle eines Blattes ein dreidimensionaler Körper verwendet, kann dessen Höhe als Referenz dienen.

Wesentlich ist, dass die Referenzpunkte relativ zueinander bestimmt werden, also den tatsächlichen realen Fuß abbilden. Es werden also nicht, wie im Stand der Technik üblich, Werte ermittelt und anschließend mit zuvor ermittelten und gespeicherten Daten verknüpft. Die Distanzen zwischen den Referenzpunkten werden dabei durch Inbezugnahme zum Größenreferenzobjekts ermittelt.

Als Referenzpunkte eignen sich bei einem Fuß beispielsweise das freie Ende des großen Zehs, der äußere Punkt des kleinsten Zehs, die Höhe des Fußgewölbesund/oder die Höhe des großen Zehs über dem Blatt und die Lage des Fußspanns. Darüber hinaus können je nach Bedarf auch weitere Referenzpunkte bestimmt und berechnet werden.

Die aufgenommenen Fotos werden in einem nächsten Schritt vorteilhafterweise an einen Computer übertragen, der die Lage der Referenzpunkte zueinander berechnet. Vorteilhafterweise kann alternativ auch das digitale Endgerät selbst die Berechnungen durchführen, wenn dieses eine ausreichende Rechenkapazität aufweist. Insofern kann auch auf einen Computer vollständig verzichtet werden.

Aus den Referenzpunkten kann sozusagen ein virtuelles Abbild des zuvor fotografierten Fußes rechnerisch erstellt werden.

Der Begriff "virtuelles Abbild" ist nicht wörtlich zu verstehen, sondern vielmehr funktionell. Es ist also nicht notwendig, dass ein sichtbares, durch ein benutzererkennbares virtuelles Abbild erzeugt wird, vielmehr sollen die äußeren Abmessungen des Fußes bestimmt werden. Somit ist es letztendlich auch möglich, dass das virtuelle Abbild lediglich als Datensatz vorliegt.

In einem nächsten Verfahrensschritt wird aus dem dreidimensionalen virtuellen Abbild des Fußes ein Datensatz berechnet, der ein zweidimensionales Datennetz auf Basis der zuvor berechneten Referenzpunkte beinhaltet. Das dreidimensionale Abbild des Fußes wird in eine oder mehrere zweidimensionale Flächen umgerechnet. Diese zweidimensionalen Daten dienen als Fertigungs- oder Schneidmuster für die anschließende Fertigung von Schuhelementen, also angepasster Fertigungsteile. Bei der Berechnung der Flächen kann gegebenenfalls berücksichtigt werden, ob der Schuh einen engeren oder weiteren Sitz aufweisen soll. Auch können Toleranzen einfließen, die für die spätere Verbindung der Schuhelemente notwendig sein könnten.

Im Prinzip weist das auf der Findung basierende Verfahren vier wesentliche Verfahrensschritte auf:
a) eine biometrische Vermessung von zumindest einem Körperteil, für die das Kleidungsstück gedacht ist,
b) eine Analyse der durch die Vermessung ermittelten Daten und Berechnung eines Datensatzes zur Fertigung von Fertigungsteilen zur Herstellung des Kleidungsstücks mit Indikatorelementen,
c) Herstellen des Kleidungsstücks in einem möglichst automatisierten Verfahren,
d) Erzeugen eines nächsten Datensatzes, enthaltend Abmessungen des genutzten ersten Kleidungsstücks sowie Daten aus einer Auswertung der Indikatorelementen. Gegebenenfalls können auch erneut ermittelte biometrische Daten des Körperteils berücksichtigt werden.

Die Erfindung wird anhand der nachfolgenden Figuren näher erläutert. Diese sind nur beispielhaft zu verstehen und sollen lediglich Ausführungsvarianten der Erfindung darstellen. Sämtliche Merkmale der Beschreibung können miteinander kombiniert werden, auch wenn diese nicht unbedingt im Zusammenhang gezeigt sind. Dies gilt auch für die Merkmale in den nachfolgenden Patentansprüchen.

Es zeigen:
- Figur 1:: ein Ablaufschema des erfindungsgemäßen Verfahrens,

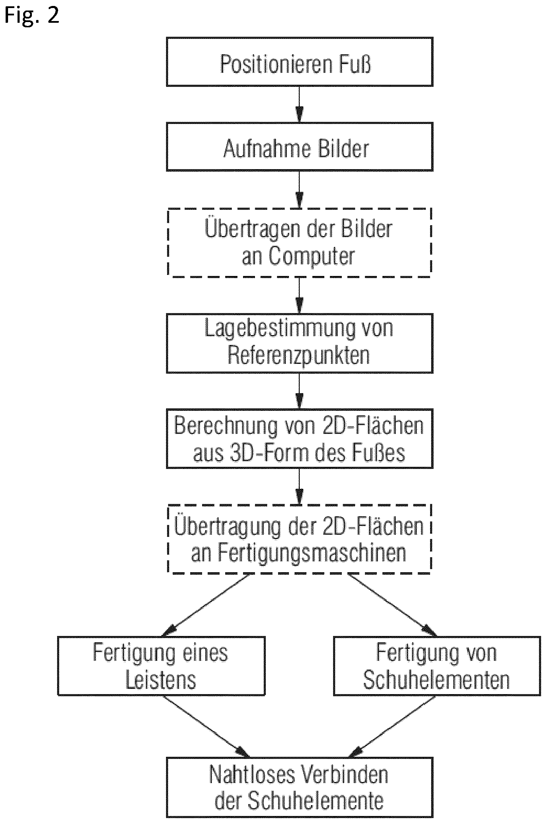

- Figur 2:: ein Ablaufschema des Vermessungsverfahrens,
- Figur 3:: eine Prinzipdarstellung eines Fußes auf einem Blatt von oben,
- Figur 4:: eine Prinzipdarstellung eines Fußes auf einem gefalteten Blatt von schräg oben,
- Figur 5:: drei Beispiele für eine Anordnung von Indikatorelementen am Kleidungsstück.

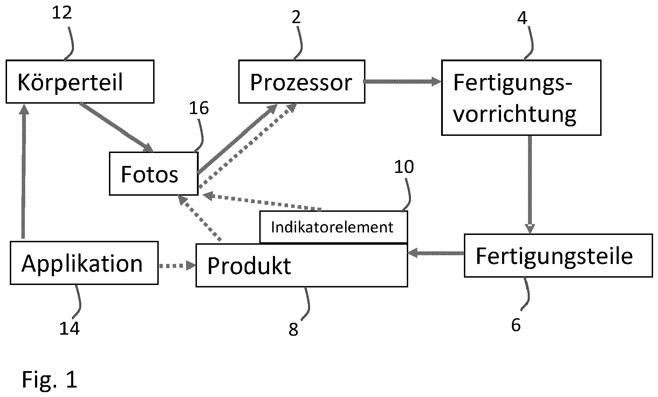

Figur 1 verdeutlicht in einem stark vereinfachten Ablaufschema das Grundprinzip des erfindungsgemäßen Verfahrens. Im Mittelpunkt steht ein Prozessor 2, der Informationen entgegennimmt und Datensätze für die Fertigung eines Kleidungsstücks (Produkt 8) berechnet. Der Datensatz des Prozessors 2 wird an eine Fertigungsvorrichtung 4 übermittelt, die Fertigungsteile 6 fertigt. Die Fertigungsvorrichtung 4 ist beispielsweise eine CNC-Schneideanlage. Diese sind besonders gut geeignet, weil sie vollautomatisch betrieben werden können und sehr kurze Einrichtungszeiten haben. Eine Stanzform ist nicht erforderlich, der Durchsatz bzw. die Fertigungsgeschwindigkeit sind hoch. Hinzu kommt, dass unterschiedlichste Materialien mit einer großen Auswahl an vielseitigen Werkzeugen bearbeitet werden können.

Aus den Fertigungsteilen 6 entsteht dann das Produkt 8. Dessen Fertigung kann ebenfalls über einen vollautomatischen Prozess erfolgen, denkbar ist aber auch eine manuelle Verarbeitung. Das Produkt weist Indikatorelemente 10 auf. Diese können beispielsweise dazu dienen, die Abnutzung des Kleidungsstücks erkennen zu können oder um andere für den Benutzer wesentliche Daten zu ermitteln. Die Indikatorelemente 10 können vorteilhafterweise nach Benutzung des Produkts fotografiert werden, vorzugsweise mit einer digitalen Kamera 26. Die Veränderung der Indikatorelemente 10 kann dann aus den Fotos 16 ausgewertet werden.

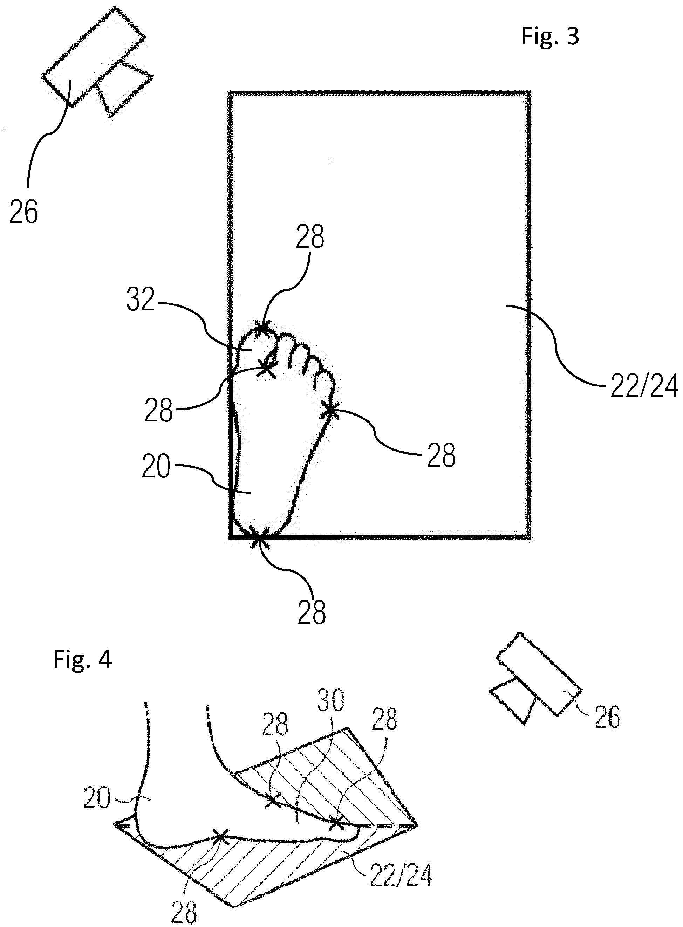

Voraussetzung für die Berechnung des Datensatzes für die Fertigung der Fertigungsteile 6 ist die Vermessung mindestens eines Körperteils 12. In einer bevorzugten Variante werden über eine Applikation 14 auf einem mobilen Endgerät mit digitaler Kamera 26 (vgl. Fig. 3) Fotos 16 erzeugt. Aus den Fotos 16 können vom Prozessor 2 Dimensionen und Abmessungen des Körperteils 12 bestimmt werden. Das Vermessungsverfahren wird nachfolgend im Detail beschrieben.

Entscheidend für das erfindungsgemäße Verfahren ist die mögliche zyklische Weiterentwicklung des gefertigten Kleidungsstücks von Generation zu Generation an die Bedürfnisse des Benutzers. Dafür wird erfindungsgemäß Feedback nach der Nutzung des Kleidungsstücks in Form von Daten ermittelt, die in die Fertigung der nächsten Generation des Kleidungsstücks einfließen. Hierfür stehen im Wesentlichen drei Möglichkeiten zur Verfügung:
- das benutzte Kleidungsstück kann vermessen werden,
- die Indikatorelemente 10 können ausgewertet werden,
- das entsprechende Körperteil 12 kann erneut vermessen werden.

Die sich daraus ergebenden Informationen werden dem Prozessor 2 in Form eines Datensatzes zugeleitet. Durch einen Vergleich des neu ermittelten Datensatzes mit Datensätzen von Kleidungsstücken vorangegangener Generationen, insbesondere mit dem Datensatz des davor gefertigten Kleidungsstücks, können Anpassungen an Datensatz für die Fertigung der nächsten Fertigungsteile 6 vorgenommen werden, die dann wiederum zu Verbesserungen des Kleidungsstücks führen. Dieser Prozess beliebig oft wiederholt werden, sodass das Kleidungsstück von Generation zu Generation optimiert werden kann.

Die die gezeigten Pfeile mit durchgehender Linie repräsentieren dabei die Fertigung des ersten Kleidungsstücks, die Pfeile mit gestrichelten Linien den oder die Fertigungsprozesse der nachfolgenden Generationen. Erkennbar ist, dass der Prozessor 2 ab der zweiten Generation zusätzliche Informationen erhält, die zur Optimierung des Kleidungsstücks genutzt werden können.

Der Verfahrensschritt der Vermessung wird am Beispiel der Vermessung eines Fu-ßes 20 erläutert. Wie bereits ausgeführt, ist das Verfahren aber auch für andere Körperteile geeignet.

Im ersten Verfahrensschritt ist es notwendig, das zu vermessende Körperteil, also hier den Fuß 20, relativ zu einem Größenreferenzobjekt 22 zu positionieren. Als Größenreferenzobjekt 22 kann beispielsweise ein DIN-A4 Blatt 24 (im Folgenden "Blatt") oder ein anderes in der Größe genormtes Blatt dienen. In einer besonders vorteilhaften Variante des Verfahrens wird der Fuß mit der Ferse in einer Ecke des Blatts 24 so positioniert, dass eine Außenseite des Fußes 20 an einer Seitenkante des Blattes ausgerichtet ist bzw. an diese angrenzt.

Anschließend werden Bilder des Fußes 20 auf dem Blatt 24 mithilfe einer digitalen Kamera 26 aufgenommen. Durch Bezugnahme auf das Größenreferenzobjekt 22 können anschließend Dimensionen abgeleitet bzw. errechnet werden.

Vorzugsweise werden die Bilder aber jeweils aus vorbestimmten Positionen aufgenommen. Die vorbestimmten Positionen der digitalen Kamera 26 im Raum bzw. relativ zum Fuß 20 sind für eine vorteilhafte Berechnung der Dimensionen wesentlich, da so die Größenverhältnisse zuverlässig und schnell bestimmbar sind.

Zur Kontrolle und Einstellung der korrekten Position der Kamera 26 im Raum ist auf dieser vorzugsweise eine entsprechende Applikation vorinstalliert, die unter Nutzung des integrierten Lagesensors der Kamera 26 beispielsweise eine Lageanzeige auf einem Display anzeigt.

Es ist notwendig, mehrere Bilder aus verschiedenen Richtungen aufzunehmen, um dadurch Referenzpunkte 28 am Fuß in ihrer Lage exakt bestimmen zu können. Die Referenzpunkte 28 sind dabei derart gewählt, dass sie sowohl die zweidimensionale Ausdehnung des Fußes 20 in X-Richtung und Y-Richtung als auch dessen Höhe in Z-Richtung ermöglichen. Beispielsweise ist es notwendig zu wissen, wie hoch ein Spann des Fußes 20 ist, welche maximale Höhe beispielsweise ein großer Zeh 32 hat oder wie lang der Zeh 32 ist. Selbstverständlich sind weitere Referenzpunkte 28 notwendig, die beispielsweise eine Breite des Fußes 20 im vorderen und hinteren Bereich und auch die Länge des Fußes 20 bestimmbar machen. Es hat sich gezeigt, dass für die Fertigung eines individuell angepassten Schuhs die Ermittlung von 9 bis 18 Referenzpunkten 28 ausreicht.

Insbesondere Figur 4 verdeutlicht, wie mithilfe des Blatts 24 auch die Höhe der Referenzpunkte 28 über dem auf einem Untergrund aufliegenden Blatt 24 bestimmbar ist. Zu diesem Zweck wird nach Aufnahme verschiedener Bilder aus verschiedenen Richtungen der Fuß 20 vom Blatt 24 genommen und das Blatt entlang einer Diagonalen gefaltet. Der Fuß 20 wird auf eine der beiden Hälften des Blatts 24 wieder aufgestellt und die andere Hälfte des Blatts 24 nach oben gefaltet und verbleibt in dieser Position. Dadurch ist es möglich, bei weiteren Aufnahmen die Seitenränder und die nach oben abstehende Spitze des Blatts 24 als Referenz für zu bestimmende Referenzpunkte 28 des Fußes 20 zu nutzen.

In den Figuren 3 und 4 sind beispielhaft einige Referenzpunkte 28 eingezeichnet.

Anhand der Bilder mit dem Größenreferenzobjekt 22 ist es im nächsten Schritt möglich, die exakten Referenzpunkte 28 des realen Fußes 20 in ihrer Lage in Bezug auf das Referenzobjekt 22, also das Blatt 24, und in Relation zueinander exakt zu bestimmen. Vorteilhafterweise wird hierzu ein geeignetes Computerprogramm genutzt, an das die aufgenommenen Bilder übertragen werden. In diesem Fall werden die Bilder an einen Computer übertragen. Über ein Bildanalyseprogramm werden die Referenzpunkte auf den Bildern vorzugsweise automatisch aufgefunden und in ihrer Lage bestimmt.

Aus den ermittelten Referenzpunkten 28 kann dann ein virtuelles Abbild des realen Fußes 20 erzeugt werden.

In einem nächsten Schritt wird dieses virtuelle dreidimensionale Abbild des Fußes 20 genutzt, um daraus ein Datennetz zu erzeugen, welcher die äußeren Flächen des Fußes repräsentiert. Im Prinzip werden die äußeren Flächen des Fußes 20 also in eine Ebene abgewickelt. Aus diesem zweidimensionalen Datennetz können dann in einem nächsten Schritt die gewünschten Fertigungsteile, hier Schuhelemente bestimmt werden.

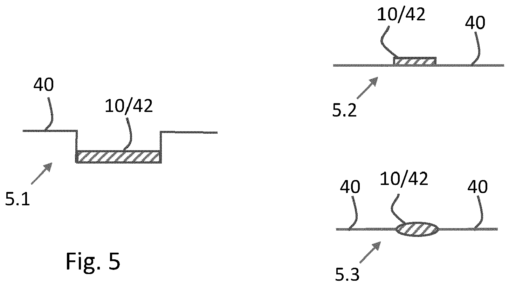

Figur 5 zeigt beispielhaft drei Ausführungsvarianten zur Anordnung eines Indikatorelements 10 an einem Kleidungsstück. Bei der Variante in Figur 5.1 ist das Indikatorelement 10 in einer Vertiefung in einer Oberfläche 40 des Kleidungsstücks angeordnet. Bei der Variante gemäß Figur 5.2 ist das Indikatorelement 10 gegenüber der Oberfläche 40 des Kleidungsstücks erhaben positioniert. Fig. 5.3 zeigt als Indikatorelement 10 ein kleine Kugel bzw. Ellipse, die in die Oberfläche eingewoben ist und sich ebenfalls verändert oder abnutzt und/oder letztendlich verloren geht. Das Indikatordement 10 kann beispielsweise lediglich durch eine Farbschicht 42 gebildet sein, die sich bei Benutzung abträgt und schließlich nicht mehr sichtbar ist. Wird das Kleidungsstück nach der Benutzung mithilfe einer digitalen Kamera erneut fotografiert, kann aus dem den digitalen Fotos zugrundeliegenden Daten leicht ermittelt werden, ob die Indikatorelemente 10 noch sichtbar sind oder nicht. Sind sie nicht mehr sichtbar, wurde offensichtlich Material in diesem Bereich abgetragen. Dies gilt für beide Varianten, also wenn das Indikatorelement 10 in einer Vertiefung oder wenn es gegenüber der Oberfläche 50 erhaben angeordnet ist. Die Indikatorelemente 10 sind somit als binäre Dateninformation nutzbar.

Alternativ können die Indikatorelemente 10 auch Beschichtungen aufweisen, die andersartige Informationen erkennen lassen. Beispielsweise können maximale Temperaturen oder pH-Werte durch Farbumschläge sichtbar gemacht werden.

### Bezugszeichen

- 2: Prozessor
- 4: Fertigungsvorrichtung
- 6: Fertigungsteile
- 8: Produkt
- 10: Indikatorelemente
- 12: Körperteil
- 14: Applikation
- 16: Fotos
- 20: Fuß
- 22: Größenreferenzobjekt
- 24: DIN-A-Blltt
- 26: Kamera
- 28: Referenzpunkte
- 32: Großzeh
- 40: Oberfläche
- 42: Farbschicht

## Patentansprüche

1. Verfahren zur Optimierung von individuell maßgeschneiderten gleichartigen Kleidungsstücken, aufweisend die Verfahrensschritte
a. Vermessen zumindest eines Körperteils (12) und Erzeugen eines ersten Datensatzes für die Fertigung des Kleidungsstücks, enthaltend Abmessungen des Körperteils (12),
b. Herstellen eines ersten Kleidungsstücks auf Basis des ermittelten Datensatzes, wobei das Kleidungsstück zumindest ein passives, maschinenlesbares Indikatorelement (10) aufweist, über das Eigenschaften und/oder Veränderungen des Kleidungsstücks aufgrund der Nutzung des Kleidungsstücks durch einen Benutzer als binärer Code ermittelbar sind,
c. Nutzung des ersten Kleidungsstücks durch einen Benutzer,
d. Untersuchen des genutzten ersten Kleidungsstücks hinsichtlich Veränderungen aufgrund der Nutzung durch den Benutzer für die Fertigung eines gleichartigen zweiten Kleidungsstücks, dabei
- Erzeugen eines zweiten Datensatzes, enthaltend Abmessungen des genutzten ersten Kleidungsstücks,
- Vergleichen des zweiten Datensatzes mit dem ersten Datensatz,
- Überprüfen des Indikatorelements (10) hinsichtlich für die Fertigung des zweiten Kleidungsstücks relevanter Informationen,
e. Erzeugen eines Fertigungsdatensatzes basierend auf dem ersten Datensatz, dem zweiten Datensatz und dem Ergebnis aus der Überprüfung des Indikatorelements (10),
f. Herstellen des zweiten Kleidungsstücks auf Basis des Fertigungsdatensatzes,
g. bedarfsweises Wiederholen der vorherigen Verfahrensschritte d) bis f) ausgehend vom jeweils zuletzt hergestellten und genutzten Kleidungsstück zur weiteren Optimierung der Passform und/oder der Eigenschaften des jeweils neu zu fertigenden Kleidungsstücks.

2. Verfahren nach Anspruch 1, **dadurch gekennzeichnet, dass** der erste Datensatz, der Fertigungsdatensatz und alle weiteren Fertigungsdatensätze an zumindest eine Fertigungsvorrichtung (4) übertragen wird, welche Fertigungsteile (6) des Kleidungsstücks fertigt.

3. Verfahren nach Anspruch 1 oder Anspruch 2, **dadurch gekennzeichnet, dass** das Indikatorelement (10) derart ausgeführt ist, dass es eine Abnutzung des Kleidungsstücks erkennbar macht.

4. Verfahren nach Anspruch 3, **dadurch gekennzeichnet, dass** das Indikatorelement (10) durch Benutzung des Kleidungsstücks mechanisch veränderbar ist.

5. Verfahren nach einem der Ansprüche 1 bis 4 **dadurch gekennzeichnet, dass** das Indikatorelement (10) derart ausgeführt ist, dass es ein lokales Mikroklima, welches sich durch Benutzung innerhalb des Kleidungsstücks einstellt, erkennbar macht.

6. Verfahren nach einem der Ansprüche 1, bis 5 **dadurch gekennzeichnet, dass** das Indikatorelement (10) als Feuchtigkeits-Indikator ausgeführt ist.

7. Verfahren nach einem der Ansprüche 1 bis 6, **dadurch gekennzeichnet, dass** das Indikatorelement (10) als pH-Wert-Indikator ausgeführt ist.

8. Verfahren nach einem der Ansprüche 1 bis 7, **dadurch gekennzeichnet, dass** sich das Indikatorelement (10) zur farblich verändert.

9. Verfahren nach einem der Ansprüche 1 bis 8, **dadurch gekennzeichnet, dass** das Indikatorelement (10) innerhalb einer Vertiefung in einer Oberfläche (40) des Kleidungsstücks angeordnet ist.

10. Verfahren nach einem der Ansprüche 1 bis 9, **dadurch gekennzeichnet, dass** das Indikatorelement (10) erhaben gegenüber einer Oberfläche (40) des Kleidungsstücks angeordnet ist.

11. Verfahren nach einem der Ansprüche 1 bis 10, **dadurch gekennzeichnet, dass** dann, wenn das Indikatorelement (10) eine erhöhte Abnutzung erkennbar macht, das nächste Kleidungsstück in dem entsprechenden Bereich mechanisch verstärkt gefertigt wird.

12. Verfahren nach einem der Ansprüche 5 bis 11, **dadurch gekennzeichnet, dass** dann, wenn das Indikatorelement (10) ein für den Benutzer ungünstiges Mikroklima erkennbar macht, das nächste Kleidungsstück derart verändert gefertigt wird, dass sich das Mikroklima bei der Benutzung verbessert.

13. Verfahren nach einem der Ansprüche 6 bis 11, **dadurch gekennzeichnet, dass** im nächsten zu fertigenden Kleidungsstück Belüftungsöffnungen oder dünnere Materialien vorgesehen werden, wenn das Indikatorelement (10) eine erhöhte Schweißproduktion des Benutzers erkennbar macht.

14. Verfahren nach einem der Ansprüche 1 bis 13, **dadurch gekennzeichnet, dass** das zu fertigende Kleidungsstück aus der Gruppe Schuh, Oberteil, insbesondere Jacke oder Hose ist.

15. Verfahren nach einem der Ansprüche 1 bis 14, **dadurch gekennzeichnet, dass** zusätzlich auch Informationen und/oder Datensätze weiterer genutzter gleichartiger Kleidungstücke anderer Benutzer für die Optimierung des nächsten zu fertigenden Kleidungsstücks genutzt werden.

16. Verfahren nach einem der Ansprüche 1 bis 15, **dadurch gekennzeichnet, dass** vor Fertigung einer nächsten Generation des Kleidungsstücks auch das entsprechende Körperteil (12) erneut vermessen und ein Datensatz erzeugt wird, der zur Anpassung und Verbesserung des Datensatzes zur Fertigung des Kleidungsstücks der nächsten Generation genutzt wird.

17. Verfahren nach einem der Ansprüche 1 bis 16, **dadurch gekennzeichnet, dass** das Überprüfen des Indikatorelements (10) mit Hilfe einer optischen Vorrichtung erfolgt.

18. Verfahren nach einem der Anspruch 1, **dadurch gekennzeichnet, dass** die Vermessung des Körperteils (12) und Erzeugen eines darauf basierenden Datensatzes die nachfolgenden Verfahrensschritte aufweist
1. Positionieren des Körperteils (12) relativ zu einem Größenreferenzobjekt (22),
2. Aufnahme von Bildern des Körperteils (12) und des Größenreferenzobjekts (22) aus mehreren unterschiedlichen Perspektiven mithilfe einesrdigitalen Kamera (26),
3. Bestimmen von Referenzpunkten (28) des Körperteils (12) und deren relativer Position zueinander aus den aufgenommenen Bildern,
4. Erzeugen eines virtuellen Abbildes des Körperteils (12) auf Basis der Referenzpunkte (28),
5. Erzeugen von Daten für die Fertigung des an das Körperteil (12) angepassten Kleidungsstücks.

## Claims

1. Process for optimizing individually tailored garments of the same type, comprising the steps of:
a. Measuring at least one body part (12) and generating a first data set for manufacturing the garment, including measured data of the body part (12),
b. Manufacturing a first garment based on the determined data set, wherein the garment comprises of at least one indicator element (10) via which properties and/or changes of the garment due to the use of the garment by a user can be determined,
c. Use of the first garment by a user,
d. Examining the used first garment with regard to changes due to the use by the wearer for the production of a second garment of the same type, thereby
▪ generating a second data set containing measured data of the used first garment,
▪ comparing the second data set with the first data set,
▪ checking the indicator element (10) with regard to information relevant to the production of the second garment,
e. Generating a third data set based on the first data set, the second data set, and the result from the indicator element check (10),
f. Manufacturing the second garment based on the third data set,
g. Repeating as necessary the previous method steps d) to f), starting from the respective last garment produced and used, for further optimization of the fit and/or the properties of the respective new garment to be produced.

2. Process according to claim 1, **characterized in that** the first data record, the manufacturing data record and all further manufacturing data records are transmitted to at least one manufacturing device (4) which manufactures parts (6) of the garment.

3. Process according to claim 1 or claim 2, **characterized in that** the indicator element (10) is designed in such a way that it makes wear of the garment detectable.

4. Process according to claim 3, **characterized in that** the indicator element (10) is mechanically changeable by use of the garment.

5. Process according to any one of claims 1 to 4, **characterized in that** the indicator element (10) is designed in such a way that it makes it possible to detect a local microclimate which is established within the garment as a result of wear.

6. Process according to one of claims 1 to 5, **characterized in that** the indicator element (10) is designed as a moisture indicator.

7. Process according to one of claims 1 to 6, **characterized in that** the indicator element (10) is designed as a pH value indicator.

8. Process according to one of claims 1 to 7, **characterized in that** the indicator element (10) changes color.

9. Process according to any one of claims 1 to 8, **characterized in that** the indicator element (10) is arranged within a depression in a surface (40) of the garment.

10. Process according to any one of claims 1 to 9, **characterized in that** the indicator element (10) is arranged raised with respect to a surface (40) of the garment.

11. Process according to one of the claims 1 to 10, **characterized in that** if the indicator element (10) reveals increased wear, the next garment is manufactured mechanically reinforced in the corresponding area.

12. Process according to one of the claims 5 to 11, **characterized in that** if the indicator element (10) indicates an unfavorable microclimate for the user, the next garment is manufactured modified in such a way that the microclimate improves during use.

13. Process according to one of claims 6 to 11, **characterized in that** ventilation openings or thinner materials are provided in the next garment to be manufactured if the indicator element (10) makes an increased sweat production of the user recognizable.

14. Process according to one of claims 1 to 13, **characterized in that** the garment to be manufactured is from the group shoe, upper, in particular jacket or trousers.

15. Process according to one of the claims 1 to 14, **characterized in that** additionally also information and/or data sets of further used similar garments of other users are used for the optimization of the next garment to be produced.

16. Process according to one of the claims 1 to 15, **characterized in that**, before manufacturing a next generation of the garment, the corresponding body part (12) is also measured again and a data record is generated, which is used for adapting and improving the data record for manufacturing the garment of the next generation.

17. Process according to any one of claims 1 to 16, **characterized in that** the checking of the indicator element (10) is carried out with the aid of an optical device.

18. Process according to claim 1, **characterized in that** the measuring of the body part (12) and generating a data set based thereon comprises the following method steps:
1. Positioning the body part (12) relative to a size reference object (22),
2. Capturing images of the body part (12) and the size reference object (22) from a plurality of different perspectives using a digital camera (26),
3. Determining reference points (28) of the body part (12) and their relative position to each other from the captured images,
4. Generating a virtual image of the body part (12) based on the reference points (28),
5. Generating data for manufacturing the tailored garment to the body part (12).

## Revendications

1. Procédé d'optimisation de de la fabrication de vêtements sur mesure individuelle du même type, comprenant les étapes suivantes :
a. Mesurer au moins une partie du corps (12) et générer un premier ensemble de données pour la fabrication du vêtement, comprenant des données mesurées de la partie du corps (12),
b. Fabriquer un premier vêtement sur la base de l'ensemble de données déterminé, le vêtement comprenant au moins un élément indicateur passif et lisible par machine (10) par le biais duquel des propriétés et/ou des changements du vêtement dus à l'utilisation du vêtement par un utilisateur peuvent être déterminés en tant que code binaire,
c. Utilisation du premier vêtement par un utilisateur,
d. Examiner le premier vêtement utilisé en ce qui concerne les changements dus à l'utilisation par le porteur pour la production d'un deuxième vêtement du même type, comprenant
- Générer un deuxième ensemble de données contenant des données mesurées du premier vêtement utilisé,
- Comparer le deuxième ensemble de données avec le premier ensemble de données,
- Vérifier l'élément indicateur (10) en ce qui concerne les informations pertinentes pour la production du deuxième vêtement,
e. Générer un troisième ensemble de données basé sur le premier ensemble de données, le deuxième ensemble de données, et le résultat de la vérification de l'élément indicateur (10),
f. Fabriquer le deuxième vêtement sur la base du troisième ensemble de données,
g. Répéter si nécessaire les étapes précédentes d) à f), en commençant par le dernier vêtement produit et utilisé respectivement, pour une optimisation ultérieure de l'ajustement et/ou des propriétés respectives du nouveau vêtement à produire.

2. Procédé selon la revendication 1, **caractérisé en ce que** le premier ensemble de données, le deuxième ensemble de données et tous les enregistrements de données de fabrication ultérieurs sont transmis à au moins un dispositif de fabrication (4) qui fabrique des parties (6) du vêtement.

3. Procédé selon la revendication 1 ou la revendication 2, **caractérisé en ce que** l'élément indicateur (10) est conçu de manière à rendre l'usure du vêtement détectable.

4. Procédé selon la revendication 3, **caractérisé en ce que** l'élément indicateur (10) est mécaniquement modifiable par l'utilisation du vêtement.

5. Procédé selon l'une quelconque des revendications 1 à 4, **caractérisé en ce que** l'élément indicateur (10) est conçu de manière à rendre détectable un microclimat local établi à l'intérieur du vêtement suite à une usure.

6. Procédé selon l'une quelconque des revendications 1 à 5, **caractérisé en ce que** l'élément indicateur (10) est conçu comme indicateur d'humidité.

7. Procédé selon l'une quelconque des revendications 1 à 6, **caractérisé en ce que** l'élément indicateur (10) est conçu comme un indicateur de pH.

8. Procédé selon l'une quelconque des revendications 1 à 7, **caractérisé en ce que** l'élément indicateur (10) change de couleur.

9. Procédé selon l'une quelconque des revendications 1 à 8, **caractérisé en ce que** l'élément indicateur (10) est disposé à l'intérieur d'un creux ans une surface (40) du vêtement.

10. Procédé selon l'une quelconque des revendications 1 à 9, **caractérisé en ce que** l'élément indicateur (10) est disposé en relief par rapport à une surface (40) du vêtement.

11. Procédé selon l'une quelconque des revendications 1 à 10, **caractérisé en ce que** si l'élément indicateur (10) révèle une usure accrue, le prochain vêtement fabriqué est renforcé mécaniquement dans la zone correspondante.

12. Procédé selon l'une quelconque des revendications 5 à 11, **caractérisé en ce que** si l'élément indicateur (10) indique un microclimat défavorable pour l'utilisateur, le prochain vêtement fabriqué est modifié de manière à améliorer le microclimat pendant l'utilisation.

13. Procédé selon l'une quelconque des revendications 6 à 11, **caractérisé en ce que** des ouvertures de ventilation ou des matériaux plus minces sont prévus dans le prochain vêtement à fabriquer si l'élément indicateur (10) rend une production de sueur accrue de l'utilisateur reconnaissable.

14. Procédé selon l'une quelconque des revendications 1 à 13, **caractérisé en ce que** le vêtement à fabriquer est du groupe chaussure, partie supérieure, en particulier veste ou pantalon.

15. Procédé selon l'une quelconque des revendications 1 à 12, **caractérisé en ce que** des informations et/ou des ensembles de données supplémentaires de vêtements similaires utilisés par d'autres utilisateurs sont également utilisés pour l'optimisation du prochain vêtement à fabriquer.

16. Procédé selon l'une quelconque des revendications 1 à 15, **caractérisé en ce que**, avant la fabrication d'une nouvelle génération du vêtement, la partie du corps correspondante (12) est également mesurée à nouveau et un enregistrement de données est généré, qui est utilisé pour adapter et améliorer l'enregistrement de données pour la fabrication du vêtement de la prochaine génération.

17. Procédé selon l'une quelconque des revendications 1 à 16, **caractérisé en ce que** la vérification de l'élément indicateur (10) est effectuée à l'aide d'un dispositif optique.

18. Procédé selon la revendication 1, **caractérisé en ce que** la mesure de la partie du corps (12) et la génération d'un ensemble de données basé sur celle-ci comprend les étapes suivantes :
1. Positionner la partie du corps (12) par rapport à un objet de reference de taille (22),
2. Capturer des images de la partie du corps (12) et de l'objet de référence de taille (22) selon plusieurs perspectives différentes à l'aide d'un appareil photo numérique (26),
3. Déterminer les points de référence (28) de la partie du corps (12) et leur position relative les uns par rapport aux autres à partir des images capturées,
4. Générer une image virtuelle de la partie du corps (12) sur la base des points de référence (28),
5. Générer des données pour la fabrication du vêtement adapté à la partie du corps (12).
